# EUROPÄISCHE PATENTSCHRIFT

(11) **EP 0 468 083 B1**
(45) Veröffentlichungstag und Bekanntmachung des Hinweises auf die Patenterteilung: **15.11.1995**
(21) Anmeldenummer: 90114429.5
(22) Anmeldetag: 27.07.1990
(51) Int. Cl.: F02C 3/02

(54) **Verfahren zur Aufbereitung des Arbeitsgases in einer Gasturbinenanlage**
Method of treating working gas in a gas turbine plant
Procédé de traitement du gaz de travail dans une turbine à gaz

(43) Veröffentlichungstag der Anmeldung: 29.01.1992
(73) Patentinhaber: ASEA BROWN BOVERI AG, 5400 Baden (CH)
(72) Erfinder: Keller, Jakob, Dr., CH-5605 Dottikon (CH)

(56) Entgegenhaltungen:
- EP-A- 0 212 181
- FR-A- 937 689
- US-A- 2 705 867

## Beschreibung

Die vorliegende Erfindung betrifft ein Verfahren zur Aufbereitung des Arbeitsgases in einer Gasturbinenanlage gemäss Oberbegriff des Anspruchs 1.

### Stand der Technik

In EP-B1-0 212 181 ist als Hochdruckverdichterteil einer Gasturbinenanlage eine Druckwellenmaschine vorgeschlagen worden, bei welcher das Hochdruckgas durch Selbstzündung eines Brennstoffes erzeugt wird, welcher seinerseits aus Brennstoffdüsen in einem Gehäuse der Druckwellenmaschine im Bereich der Niederdruckkanäle in den Zellenrotor eingespritzt bzw. eingeblasen wird. Die Selbstzündung erfolgt dabei detonationsartig beim Zusammentreffen des Brennstoff/Luft-Gemisches einer im Bereich der Brennstoffeinbringung auftretenden Kompressionswelle. Die mithin auftretenden Druckwellen erzeugen einerseits in den entsprechenden Bereichen des Rotorraumes Hochdruckluft, die durch einen Hochdruckluftkanal einer Brennkammer zur Erzeugung von Treibgas für die Gasturbine zugeführt wird.

Anderseits erzeugen die Druckwellen in einem weiteren Bereich des Rotorraumes beim Fortschreiten der Zellen des Rotors im Rotorraum, ein Mitteldrucktreibgas und ein Niederdrucktreibgas, die über den Mitteldruckgaskanal und Hochdruckluftkanal in das Gehäuse Brennstoffeinspritzdüsen bzw. in das brennkammerseitige Gehäuse dem Mitteldruck- bzw. dem Niederdruckteil der Turbine zugeführt werden.
Eine Gasturbine mit einer Druckwellenmaschine, die als Hochdruckstufe dient, weist gegenüber einer gewöhnlichen Gasturbine wichtige Vorteile auf, welche sich wie folgt umschreiben lassen:
1. Die Druckwellenmaschine erlaubt, ähnlich wie ein Kolbenmotor, sehr viel höhere Gastemperaturen;
2. Die Druckwellenmaschine ermöglicht eine Verbrennung bei konstantem Volumen;
3. Die Druckwellenmaschine ermöglicht eine optimale Nutzung transienter Vorgänge (Detonationstransienten)

Während die klassischen Druckwellenmaschinen, die als Auflader bei Brennkraftmaschinen zum Einsatz kommen, nur den ersten Effekt benützen, basiert die in EP-B1- 0 212 181 vorgeschlagene Druckwellenmaschine auf einer Kombination aller obenaufgeführten Effekte. Nun ist es aber so, dass mit vielen Brennstoffen, beispielsweise mit Erdgas, die in der genannten Patentschrift angestrebten Bedingungen hinsichtlich Druck und Temperatur zur Zündung einer Detonation erst in Exstremsituationen erreicht werden, die indessen für den herkömmlichen Maschinenbau nicht typisch sind, weshalb die grundlegenden Potentiale hinsichtlich Wirkungsgradvorteile einer als Hochdruckverdichterteil einer Kraftwerksanlage eingesetzten Druckwellenmaschine im herkömmlichen Maschinenbau praktisch nicht erreicht werden.

Aus US-2,705,867 ist eine Anlage zur Aufbereitung eines Arbeitsgases bekanntgeworden, welche im wesentlichen aus einem Verdichter, einer dem Verdichter nachgeschalteten Druckwellenmaschine und einer der Druckwellenmaschine nachgeschalteten Turbine besteht. Die verdichtete Luft aus dem Verdichter wird vor Eintritt in die Zellen der Druckwellenmaschine mit Brennstoff gemischt, und anschliessend in die dort vorbeidrehenden Zellen eingeleitet, wo zu einer Verbrennung bei konstantem Volumen kommt. Dabei geschieht die Zündung dieses Gemisches anhand von Zündkerzen. Bei dieser Zündungsart ist festzustellen, dass die vorgesehene Zündkerze keine zellenbezogene, gleichmässige Zündung auszulösen vermag, weshalb der Ausbrand in den einzelnen Zellen ungleichmässig und sonach mangelhaft ausfällt. Dies ist indessen eine Ursache dafür, dass der Wirkungsgrad bei einer solcherart inizierten Zündung eine wesentliche Einbusse erleidet.

### Aufgabe der Erfindung

Hier will die Erfindung Abhilfe schaffen. Der Erfindung, wie sie in den Ansprüchen gekennzeichnet ist, liegt die Aufgabe zugrunde, bei einem Verfahren der eingangs genannten Art den Wirkungsgrad zu maximieren; es sollen mindestens jene optimalen Resultate erzielt werden, die beim Einsatz einer Druckwellenmaschine, in welcher keine detonationsartige Verbrennung stattfindet, nachgewiesen werden.

Der wesentliche Vorteil der Erfindung ist darin zu sehen, dass die Druckwellenmaschine eine Verbrennung bei konstantem Volumen ermöglicht. Sie erbringt deshalb eine konsequente Nutzung des zweitgenannten Vorteils, wobei auch der erstgenannte Vorteil, nämlich, dass die Druckwellenmaschine sehr viel höhere Gastemperaturen erlaubt, teilweise zur Geltung kommt. Aufgrund der Tatsache, dass die Verbrennung in einer geschlossenen Zelle, also bei konstantem Volumen stattfindet, kann der Wirkungsgrad einer mit der erfindungsgemässen Druckwellenmaschine bestückten Gasturbine im Vergleich zur klassischen Gleichdruckverbrennung deutlich angehoben werden.

Vorteilhafte und zweckmässige Weiterbildungen der erfindungsgemässen Aufgabenlösung sind in den weiteren Ansprüchen gekennzeichnet.

Im folgenden wird anhand der Zeichnung Ausführungsbeispiele der Erfindung näher erläutert. Alle für das unmittelbare Verständnis der Erfindung nicht erforderlichen Elemente sind fortgelassen. Die Strömungsrichtung der verschiedenen Medien ist mit Pfeilen angegeben. In den verschiedenen Figuren sind gleiche Elemente jeweils mit den gleichen Bezugszeichen versehen.

### Kurze Beschreibung der Figuren

Es zeigt:
- Fig. 1: ein Schaltschema für die Kombination einer Gasturbine mit einer Druckwellenmaschine mit integrierter Verbrennung bei festem Volumen;
- Fig. 2: einen schematischen Verlauf des Druckwellenprozesses der erfindungsgemässen Druckwellenmaschine;
- Fig. 3: eine Einbringung des Brennstoffes über einen Vormischkanal;
- Fig. 4: eine Möglichkeit einer kontinuierlichen Zündung;
- Fig. 5 und 6: eine weitere Variante der Zündung.

### Beschreibung der Ausführungsbeispiele

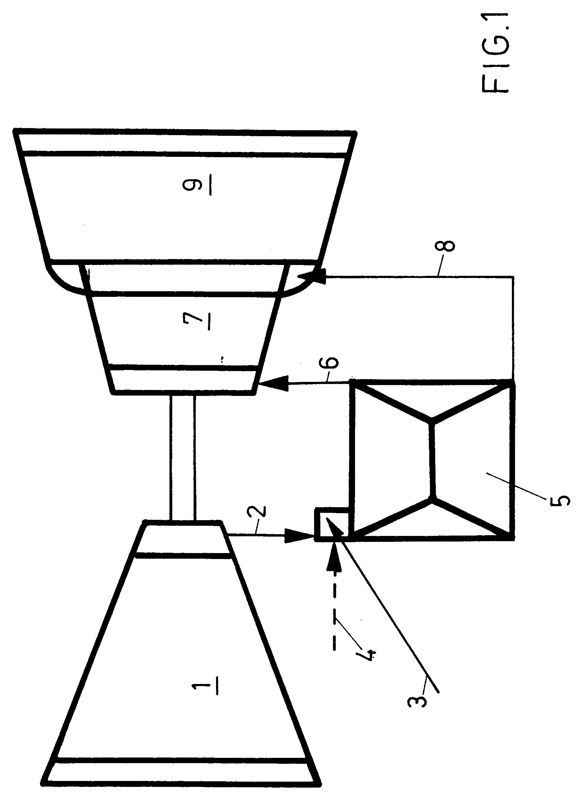

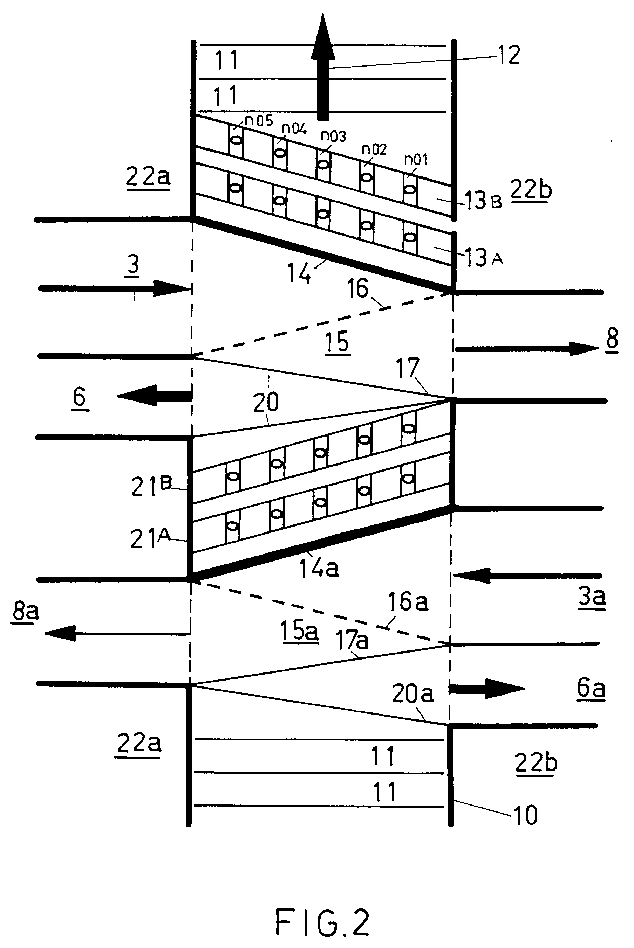

Bei der in Fig. 1 schematisch dargestellten Gasturbinenanlage liefert ein Niderdruckverdichter 1 vorverdichtete Luft über eine Niederdruckleitung 2 in eine Druckwellenmaschine 4. Die Niederdruckleitung 2 mündet vorerst in einen Vormischkanal 3, in welchem ein Brennstoff 4 zugeführt wird. Wie in Fig. 2 noch detailliert zur Erläuterung kommen wird, wird eine Hochdruck-Turbine 7 und eine Niederdruck-Turbine 9 durch entsprechende in der Druckwellenmaschine 5 aufbereitete Gase beaufschlagt, einmal über eine Hochdruck-Treibgasleitung 6 und einmal über eine Niederdruck-Treibgasleitung 8. Es ist anzumerken, dass die Gasturbinenanlage auch durch eine vereinfachte Variante ohne Niederdruckturbine 9 charakterisiert sein kann. Eine solche Vereinfachung käme in erster Linie bei Kombiprozessen zur Anwendung, wo die hohe Abgastemperatur zur Frischdampfaufbereitung eingesetzt wird.

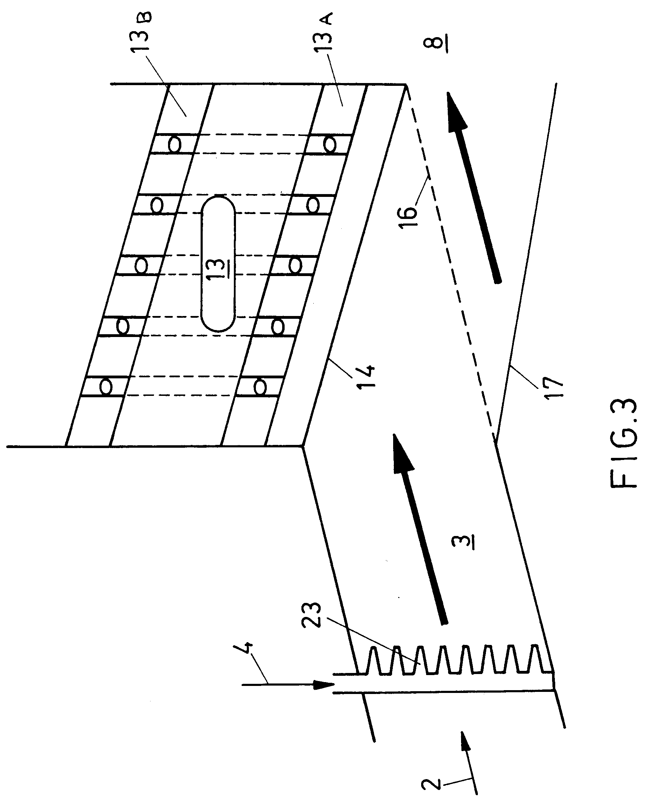

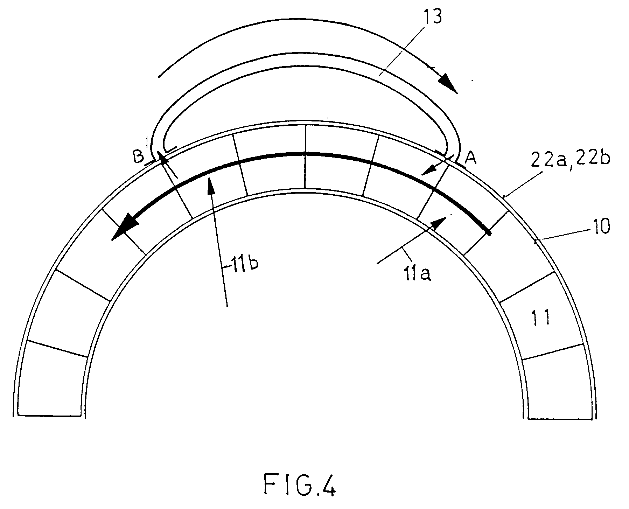

Fig. 2 zeigt skelettartig eine Abwicklung des Zellenrotors 10 der Druckwellenmaschine 5, soweit sie zur Erklärung des Druckwellenprozesses gebraucht wird. Vom Zellenrotor 10 sind nur einzelne Zellen 11 dargestellt, die hier in der Fig. 2 rechtwinklig zur Drehrichtung 12 des Zellenrotors 10 verlaufen. Selbstverständlich können diese Zellen auch schräg dazu angeordnet sein, wie dies beispielsweise in EP-B1-0 212 181 beschrieben wird, wobei, bei erläuterndem Bedarf in diesem Zusammenhang, auf die dortige Beschreibung verwiesen wird. Der Zellenrotor 10 selbst läuft mit sehr kleinem Spiel in einem nur andeutungsweise gezeigten Gehäuse 22a, 22b, wobei die beiden Rotorstirnseiten des Gehäuses 22a, 22b mit verschiedenen Kanälen 3, 3a; 6, 6a; 8, 8a durchsetzt sind. Wie Fig. 2 schematisch zeigen will, durchläuft der Zellenrotor 10 in Drehrichtung 12 zwei diametral entgegengesetze und symmetrisch angeordnete Prozesse, wie die zweifach gezeigten Verbrennungszonen im Bereich der Zündbügel 13A, 13B und 21A und 21B versinnbildlichen wollen. Diese Konfiguration ist deshalb gewählt, um eine gleichförmige Temperaturverteilung des Rotors zu erzielen. Die Symmetrie des Prozesses wird auch dadurch angezeigt, dass die körperlichen und verfahrenstechnischen Komponenten der beiden Prozesse die gleiche Numerierung tragen und sich lediglich durch Buchstabenzusätze unterscheiden. Demnach wird im folgenden lediglich den einen Zyklusteil des Prozesses beschrieben. Die vom Verdichter kommende Niederdruckluft durchläuft eine in Fig 2 nicht ersichtliche Vormischstrecke (Vgl. Fig. 3) und mündet in Form eines Brennstoff/Luft-Gemisches über einen Vormischkanal 3 in den Wirkungsbereich der Rotorzellen 11. Wenn hier von Niederdruckluft gesprochen wird, so ist dies nicht absolut zu verstehen, sondern niedrig nur im Vergleich zu den übrigen Druckniveaus der Anlage. Diese Luft tritt also durch den vorderen Teil des Vormischkanals 3 in die Zellen 11 ein. Dabei erhalten die am Vormischkanal 3 vorbeidrehenden Zellen 11 eine Mengeneinfüllung des entsprechenden Brennstoff/Luft-Gemisches. Die Füllung der Zellen 11 zu einem konstanten Volumen wird durch die Schliesskante des Vormischkanals 3 im Gehäuse 22a vorgegeben. Mit Pos. 14 ist der Verlauf der Stosswelle zwischen Schliesskante des Vormischkanals 3 im Gehäuse 22a und Schliesskante der Niederdruck-Treibgasleitung 8 im Gehäuse 22b gekennzeichnet. Die Zündung des in den Zellen 11 zu einem konstanten Volumen eingefangenen Gemisches erfolgt entlang des durch den Gehäusekörper 22a, 22b stirnseitig abgeschlossenen Rotors 10 und wird mit einer Reihe von Zündbügeln 13A, 13B resp. 21A, 21B (auf der Gegenseite) ausgelöst, wobei diese Zündbügel eine Ueberbrückung mehrerer Zellen 11 parallel zur Drehrichtung 12 des Rotors 10 entwickeln. In Fig. 2 sind beispielsweise 5 einzelne Zündbügel, n01-n05, dargestellt, die in regelmässigen Abständen die ganze Breite des Rotors 10 abdecken und eine entsprechende Anzahl Zündstufen ergeben. Die Konfiguration und Betriebsweise dieser Zündbügel wird unter Fig. 4 dargestellt und dort näher erläutert. Die Anzahl vorzusehender Zündstufen pro Zelle 11 hängt von der jeweiligen Länge der Zelle und von den jeweiligen Betriebsverhältnissen der Druckwellenmaschine ab. Das Treibgas, das in einer geschlossenen Zelle bei konstantem Volumen anhand einer oder mehrerer Zündungen des Gemisches entsteht, gelangt im darauffolgenden Zyklusteil durch eine Hochdruck-Treibgasleitung 6a in den Hochdruckteil der Gasturbine (Vgl. hierzu Fig. 1). Die durch die Verbrennung gebildeten Treibgase treten im weiteren Bereich 15a durch eine Niederdruck-Treibgasleitung 8a und gelangen in den Niederdruckteil der Gasturbine (Vgl. hierzu auch Fig 1). Selbsverständlich kann vorgesehen werden, dass die Gasturbine auch einen Mitteldruckteil, der die Treibgase teilentspannen würde, aufweist, was hier aber nicht gezeigt wird. Für eine solche Schaltung wird auf die Ausführungen in der Druckschrift EP-B1-0 212 181 verwiesen. Danach werden diese Treibgase im Niederdruckteil auf einen Gegendruck entspannt, der dem Atmosphärendruck entspricht. Der Richtungswechsel der Geschwindigkeit gewährleistet, dass die im Treibgas laufenden Expansionswellen 20a, 17a nicht zu hohe Strömungsgeschwindigkeiten und trotzdem ein genügend starkes Druckgefälle erzeugen. Von einer Oeffnungskante der Niederdruck-Treibgasleitung 8a im Gehäuse 22a läuft die Expansionswelle zur Schliesskante des Hochdruck-Treibgasleitung 6a im Gehäuse 22b und expandiert das Treibgas von einem Druck p2 auf Druck p1, worauf es über die Niederdruck-Treibgasleitung 8a dem Niederdruckteil der Gasturbine zugeführt wird. (Vgl. hierzu Fig. 1). Die Mediengrenze 16a, die von der Oeffnungskante des Vormischkanals 3a im Gehäuse 22b zur Schliesskante des Niederdruck-Treibgaskanals 8a im Gehäuse 22a verläuft, erstreckt sich dabei über die ganze Breite des Rotors 10, wobei diese Mediengrenze 16a nicht von Expansionswellen gekreuzt wird. Das bedeutet, dass das Treibgas ganz aus den Zellen 11 gedrängt und zur Abströmung gebracht wird. Anschliessend fängt die neue Phase an, indem, analog oben, die vorbeidrehenden Zellen 11 über den Vormischkanal 3a mit dem Brennstoff/Luft-Gemisch gefüllt werden. Die Zelle 11 stellt demnach an sich eine durch ein konstantes Volumen charakterisierte "Brennkammer" dar, die so auszulegen ist, dass die in ihr erzeugten Treibgase bei maximaler Last gerade die zulässige Beschaufelungs-Grenztemperatur am Eintritt des Hochdruckteils der Gasturbine erreichen. Nach dem Hochdruckteil wird dem teilentspannten und entsprechend abgekühlten Treibgas das -unter Umständen- heissere Treibgas mit Druck p1 aus der Niederdruck-Treibgasleitung 8 resp. 8a zugemischt, und zwar derart, dass das aufgeheizte Treibgasgemisch wiederum gerade die Grenztemperatur der ersten Stufe des Niederdruckteils der Gasturbine erreicht (Vgl. hierzu Fig. 1). Weist die Gasturbine allenfalls noch einen Mitteldruckteil auf, so erfolgt die Zumischung in analoger Weise gemäss den vorgängigen Ausführungen. Ziel dieser Ueberlegungen ist es, für die Gasturbine eine grobe Annäherung an die isotherme Expansion des Carnotschen Kreisprozesses zu erreichen.

Fig. 3 zeigt einen Ausschnitt des Vormischkanals 3, der auch Vormischkanal 3a sein kann. Die vom Verdichter heranströmende Niederdruckluft 2 erfährt über eine Reihe von Injektordüsen 23, die über den ganzen Vormischkanal 3 gleichmässig verteilt sind, eine Zumischung mit, beispielsweise, Erdgas 4 zu einem Brennstoff/Luft-Gemisch. Damit die Anforderungen eines Teillastbetriebes erfüllt werden können, sind die Injektordüsen 23 als Brennstoffverteiler stufenweise zuschaltbar. Diese Betriebsweise ist auch im Hinblick auf niedrige Emissionen hinsichtlich NOX/CO/UHC sehr wichtig. Im Interesse niedriger NOx-Emissionen kann bei voller Last ein völlig gleichförmiges Gemisch erzeugt werden. Es kann aber auch ein geeigneter oberer Bereich des Vormischkanals 3 stärker mit Brennstoff angereichert werden, damit sowohl die Grenztemperatur des Hochdruck-Turbineneintritts als auch die Grenztemperatur des Niederdruck-Turbineneintritts bei voller Last gerade erreicht werden. Die übrige Figur entspricht der skelettartigen Abwicklung des Zellenrotors der Druckwellenmaschine gemäss Fig. 2.

Fig. 4 zeigt eine Möglichkeit auf, wie die kontinuierliche Zündung des in den Zellen 11 eingefangenen Brennstoff/Luft-Gemisches vonstatten gehen kann. Bei der hier gezeigten Möglichkeit könnte die Maschine zunächst mit einer Zündkerzen-Zündung im Bereich des einen Endes der Zündbügel 13 gestartet werden. Da der Zündbügel 13 in Umfangsrichtungsrichtung des Zellenrotors in etwa den Bereich zwischen Zellen 11a, in welchen sich ein gleichförmiges Brennstoff/Luft-Gemisch auf mittlerem Druck befindet, und Zellen 11b, welche die ausgebrannten Gase auf hohem Druck transportieren, abdeckt, kann sich die Zündung selbstgängig auslösen, indem diese Zündbügel 13 eben die Funktion von Ueberleitungskanälen zum Transport von ausgebrannten Gasen auf hohem Druck 6 in Zellen, wo ein gleichförmiges Brennstoff/Luft-Gemisch auf mittlerem Druck 3' vorherrscht, übernehmen. Die ausgebrannten Gase auf hohem Druck 6 bewirken am Einleitungsort eine fortlaufende Zündung des Brenngemisches in den dort vorbeidrehenden Zellen.

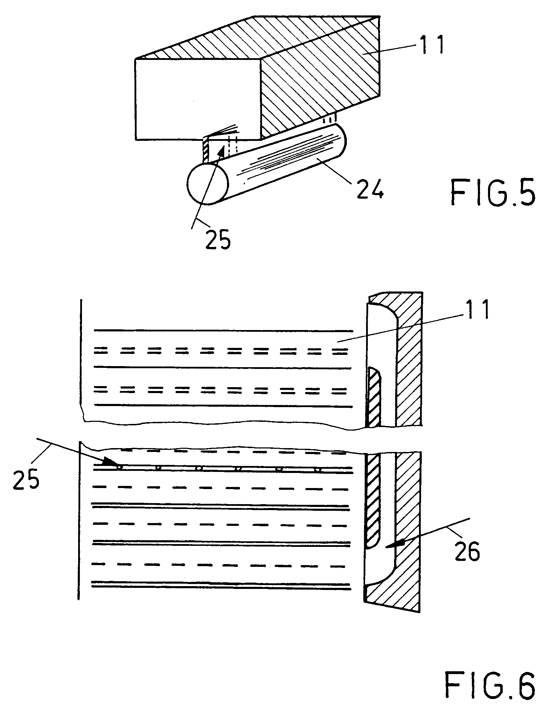

Wie aus Fig. 5 und 6 hervorgeht, kann als weitere Möglichkeit einer selbstgängigen Zündung vorgesehen werden, dass jede Zelle 11 mit einem kleinen Zündkanal 24 versehen wird, der über einige Zündbohrungen 25 im Kontakt mit der Zelle 11 steht, der aber in anderer Weise angespiesen wird als die Zelle selbst. Die angesprochene Verbindung eines Zündkanals 24 mit der Zelle 11 geht sehr aufschlussreich aus Fig. 6 hervor. Entleert würden die Zündkanäle dann durch eine Austrittsöffnung zur Hochdruckturbine, wobei diese Oeffnungen entsprechend dimensioniert werden. Aus Fig. 6 ist des weiteren ein Ueberströmkanal 26 ersichtlich, der eine Verbindung von den Zellen 11 zu den Zündkanälen 24 erstellt.

## Patentansprüche

1. Verfahren zur Aufbereitung eines Arbeitsgases in einer Gasturbinenanlage, welche im wesentlichen aus einem Verdichter (1), einer dem Verdichter (1) nachgeschalteten Druckwellenmaschine (5) und mindestens einer der Druckwellenmaschine (5) nachgeschalteten Gasturbine (7, 9) besteht, wobei die verdichtete Luft (2) aus dem Verdichter (1) vor Eintritt in die Zellen (11) der Druckwellenmaschine (5) mit einem Brennstoff (4) gemischt wird, danach das Brennstoff/Luft-Gemisch in die vorbeidrehenden Zellen (11) eingeleitet und im Zustand eines durch die Grösse der Zellen (11) indizierten konstanten Volumen zur Zündung gebracht wird, und wobei das Arbeitsgas (6, 8) anschliessend die Gasturbine (7, 9) beaufschlagt, dadurch gekennzeichnet, dass durch Einleitung einer Menge des Arbeitsgases aus Zellen hohen Druckes (11b) in die Zellen mittleren Druckes (11a) die Zündung des Brennstoff/Luft-Gemisches ausgelöst wird, und dass die zur Zündung benötigte Arbeitsgase kontinuierlich über Rückführungskanäle (13, 24, 26) in die zu zündenden Zellen geleitet werden.

2. Verfahren nach Anspruch 1, dadurch gekennzeichnet, dass die Zündung des Brennstoff/Luft-Gemisches in den Zellen hohen Druckes (11b) über mehrere Zündungspunkte (n01-n05) gleichzeitig ausgelöst wird.

3. Verfahren nach Anspruch 1, dadurch gekennzeichnet, dass ein Teil des durch die Verbrennung in den Zellen sich bildenden Arbeitsgases eine Hochdruck-Turbine (7), der restliche Teil eine Niederdruck-Turbine (9) beaufschlagt.

4. Verfahren nach den Ansprüchen 1 und 3, dadurch gekennzeichnet, dass ein Teil des aus der Hochdruck-Turbine (7) ausströmenden Gases dem Arbeitsgas zur Beaufschlagung der Niederdruck-Turbine (9) zugemischt wird.

## Claims

1. Method for preparing a working gas in a gas turbine installation which essentially comprises a compressor (1), a pressure wave machine (5) connected downstream of the compressor (1) and at least one gas turbine (7, 9) connected downstream of the pressure wave machine (5), the compressed air (2) from the compressor (1) being mixed with a fuel (4) prior to entry into the cells (11) of the pressure wave machine (5), the fuel/air mixture then being introduced into the revolving past cells (11) and being brought to ignition in the condition of a constant volume indicated by the size of the cells (11), and the working gas (6, 8) then acting upon the gas turbine (7, 9), characterized in that the ignition of the fuel/air mixture is triggered by the introduction of a quantity of the working gas from high-pressure cells (11b) into the medium-pressure cells (11a), and in that the working gases required for ignition are passed continuously via return ducts (13, 24, 26) into the cells to be ignited.

2. Method according to Claim 1, characterized in that the ignition of the fuel/air mixture in the high-pressure cells (11b) is triggered simultaneously by way of a plurality of ignition points (n01-n05).

3. Method according to Claim 1, characterized in that part of the working gas forming due to the combustion in the cells acts upon a high-pressure turbine (7) and the remaining part acts upon a low-pressure turbine (9).

4. Method according to Claims 1 and 3, characterized in that part of the gas flowing out of the high-pressure turbine (7) is admixed to the working gas for acting upon the low-pressure turbine (9).

## Revendications

1. Procédé de préparation d'un gaz de travail dans une installation de turbine à gaz, qui se compose essentiellement d'un compresseur (1), d'une machine à pression hydrodynamique (5) placée en aval du compresseur (1) et d'au moins une turbine à gaz (7, 9) placée en aval de la machine à pression hydrodynamique (5), l'air comprimé (2) en provenance du compresseur (1) étant mélangé avec un combustible (4) avant l'entrée dans les cellules (11) de la machine à pression hydrodynamique (5), le mélange combustible/air étant introduit dans les cellules (11) passant en rotation à proximité, et étant mis à feu à l'état d'un volume constant indexé par la taille des cellules (11), et le gaz de travail (6, 8) étant ensuite admis dans la turbine à gaz (7, 9), caractérisé en ce que, grâce à l'introduction d'une quantité du gaz de travail en provenance des cellules à haute pression (11b) dans les cellules à pression moyenne (11a), on déclenche l'allumage du mélange combustible/air, et en ce que l'on achemine le gaz de travail nécessaire à l'allumage de manière continue par l'intermédiaire de canaux de remise en circulation (13, 24, 26) dans les cellules destinées à être mises à feu.

2. Procédé selon la revendication 1, caractérisé en ce que l'allumage du mélange combustible/air est déclenché simultanément dans les cellules à haute pression (11b) à l'aide de plusieurs points d'allumage (n01-n05).

3. Procédé selon la revendication 1, caractérisé en ce qu'une partie du gaz de travail d'une turbine haute pression (7), qui se forme lors de la combustion dans les cellules, est admise à la portion restante d'une turbine basse pression (9).

4. Procédé selon les revendications 1 et 3, caractérisé en ce qu'une partie du gaz s'échappant de la turbine haute pression (7) est mélangée au gaz de travail en vue de l'admission à la turbine basse pression (9).
